# EUROPÄISCHE PATENTSCHRIFT

(11) **EP 2 380 270 B1**
(45) Veröffentlichungstag und Bekanntmachung des Hinweises auf die Patenterteilung: **09.01.2013**
(21) Anmeldenummer: 09764716.8
(22) Anmeldetag: 25.11.2009
(51) Int. Cl.: H02P 9/10, F03D 9/00, G05B 23/02, F03D 7/02

(54) **STATIONÄRE ENERGIEGEWINNUNGSANLAGE MIT EINER STEUEREINRICHTUG UND VERFAHREN ZUR STEUERUNG DERSELBEN**
STATIONARY ENERGY GENERATION PLANT WITH CONTROL APPARATUS AND METHOD FOR ITS CONTROL
INSTALLATION STATIONNAIRE DE PRODUCTION D'ÉNERGIE AVEC UN APPAREIL DE COMMANDE ET UN PROCÉDÉ DE SON CONTRÔLE

(30) Priorität: 19.12.2008 DE 102008063871
(43) Veröffentlichungstag der Anmeldung: 26.10.2011
(73) Patentinhaber: Robert Bosch GmbH, 70469 Stuttgart (DE)
(72) Erfinder: SCHINDELE, Lothar, 71272 Renningen (DE); BUCHTALA, Boris, 75417 Mühlacker (DE); PAWELETZ, Anton, 70736 Fellbach (DE); SCHNURR, Bernd, 97816 Lohr-Sendelbach (DE); VATH, Andreas, 63849 Leidersbach (DE)
(74) Vertreter: Thürer, Andreas
(86) Internationale Anmeldenummer: PCT/EP2009/008367
(87) Internationale Veröffentlichungsnummer: WO 2010/069456

(56) Entgegenhaltungen:
- EP-A1- 1 719 910
- DE-A1- 10 326 816
- DE-A1-102007 008 761
- US-A1- 2002 091 471
- BREKKEN T K A ET AL: "Control of a Doubly Fed Induction Wind Generator Under Unbalanced Grid Voltage Conditions" IEEE TRANSACTIONS ON ENERGY CONVERSION, IEEE SERVICE CENTER, PISCATAWAY, NJ, US LNKD- DOI:10.1109/TEC.2006.889550, Bd. 22, Nr. 1, 1. März 2007 (2007-03-01), Seiten 129-135, XP011184062 ISSN: 0885-8969

## Beschreibung

Die Erfindung betrifft eine stationäre Energiegewinnungsanlage mit einer Steuereinrichtung und ein Verfahren zur Steuerung derselben. Die Steuereinrichtung dient der Steuerung von Strom und Energiefluss. Die Energiegewinnungsanlage weist mindestens einen mechanisch angetriebenen Rotor und einen mit dem Rotor gekoppelten Generator auf. Dazu ermöglicht eine mit dem Generator in Wirkverbindung stehende Leistungselektronik einen variablen Energiefluss von dem Rotor durch den Generator und die Leistungselektronik zu einer Last. Die Steuereinrichtung soll auf die Schwingungen im Frequenzspektrum von einigen Zehntel Hz bis einigen Zehn Hz auf der Rotorseite und einigen Zehn Hz bis einigen Hundert Hz auf der Generatorseite derart reagieren und die Anlage derart aussteuern, dass eine nahezu konstante Leistung an die Last bzw. in das Netz abgegeben werden kann und sich dabei die unerwünschten Schwingungen in dem Antriebstrang der Energiegewinnungsanlage nicht aufschaukeln oder verstärken.

Dazu ist aus der Druckschrift DE 10 2007 021 513 A1 ein resistives Drehmomentschwingungs-Dämpfungssystem und Verfahren bekannt. Dieses Drehmoment-Widerstandsdämpfungssystem weist für die Achse einer Maschine einen Sensor auf, der so konfiguriert ist, dass er ein Signal erfassen kann, welches das Drehmoment auf der Achse repräsentiert. Ferner ist ein Regelgerät vorgesehen, dass so konfiguriert ist, dass es das erfasste Signal verwenden kann, um das Vorhandensein einer auf der Achse auftretenden Drehmomentschwingung zu erkennen, falls diese mit einer Eigenfrequenz der Achse übereinstimmt. Um nun Kontrollsignale zur Dämpfung der Drehmomentschwingung zu generieren, umfasst das Drehmoment-Widerstandsdämpfungssystem einen Dämpfer, der einen Dämpfungswandler und einen Widerstand umfasst, die an einen Gleichstromausgang des Dämpfungswandlers angekoppelt sind. Dabei ist der Dämpfungswandler durch einen Stromkanal an die Maschine gekoppelt und weist eine Nennleistung von weniger oder gleich 5% der nominellen Leistung der Maschine auf.

Dieses Drehmomentschwingungs-Dämpfungssystem hat, wenn es in einer Energiegewinnungsanlage eingesetzt wird, den Nachteil, dass nahezu 5% der gewonnenen Energie in Wärme umgesetzt wird und somit einen Verlust bedeuten. Dementsprechend ist der Wirkungsgrad einer derartigen Energiegewinnungsanlage vermindert.

Aufgabe der Erfindung ist es, eine stationäre Energiegewinnungsanlage mit einer Steuerungseinrichtung zu schaffen, bei der die aus den Schwingungen resultierenden Energieflüsse genutzt werden können, um sowohl die Schwingungen zu verringern und bei Schwingungsspitzen Energie zu gewinnen als auch bei Schwingungstälern diese aus der Energiegewinnung aufzufüllen.

Die Veröffentlichung "Control of a Doubly Fed Induction Wind Generator Under Unbalanced Grid Voltage Conditions" beschreibt eine Drehzahl- und Leistungs-Regelung für den doppeltgespeisten Asynchrongenerator einer Windkraftanlage zum Ausgleichen von Unsymmetrien im Netz und zum Aufheben von Schwingungen in der Leistung und im Drehmoment. Dadurch kann der Generator selbst unter derartigen Betriebsbedingungen am Netz bleiben, die normalerweise zum Trennen geführt hätten. Die Regelung berücksichtigt dabei die Trägheitsmomente des Generatorsystems.

Zur Dämpfung von Torsionsschwingungen modellieren die Dokumente EP1719910 und US2002091471 den Antriebsstrang als Masse-Feder-Verbund.

Gelöst wird die Aufgabe mit dem Gegenstand der unabhängigen Ansprüche 1 und 12. Vorteilhafte Weiterbildungen ergeben sich aus den abhängigen Ansprüchen.

Erfindungsgemäß werden eine stationäre Energiegewinnungsanlage mit einer Steuereinrichtung und ein Verfahren zur Steuerung derselben geschaffen. Die Steuereinrichtung dient der Steuerung von Strom und Energiefluss. Die Energiegewinnungsanlage weist mindestens einen mechanisch angetriebenen Rotor und einen mit dem Rotor gekoppelten Generator auf. Dazu ermöglicht eine mit dem Generator in Wirkverbindung stehende Leistungselektronik einen variablen Energiefluss von dem Rotor durch den Generator und die Leistungselektronik zu einer Last bzw. in das Netz. Zum Ausgleich von generatorseitigen Schwingungsbelastungen ist es vorgesehen, mindestens eine Stromsteuerung mit Hilfe eines ersten Zwischenkreisspeichers der Leistungselektronik zu ermöglichen. Zum Ausgleich von mechanischen Schwingungsbelastungen und Störgrößen eines Antriebsstrangs ist zusätzlich eine Energieflusssteuerung mit Hilfe mindestens eines in der Leistungselektronik angeordneten zusätzlichen zweiten Zwischenkreisspeichers vorgesehen, der eine mehrfache Speicherkapazität des ersten Zwischenkreisspeichers aufweist.

Diese stationäre Energiegewinnungsanlage hat den Vorteil, dass generatorseitige Schwingungen im Frequenzspektrum von einigen Zehn Hz bis einigen Hundert Hz, die eventuell Resonanzen im mechanischen Teil der Energiegewinnungsanlage hervorrufen könnten, durch die Stromsteuerung, die mit dem ersten Zwischenkreisspeicher in der Leistungselektronik zusammenwirkt, kompensiert werden können, so dass weder Eigenschwingungen angeregt werden noch sich Schwingungen aufschaukeln können.

Darüber hinaus hat die erfindungsgemäße stationäre Energiegewinnungsanlage den Vorteil, dass durch die Energieflusssteuerung rotorseitige Schwingungen im Frequenzspektrum zwischen einigen Zehntel Hz und einigen Zehn Hz durch das Vorsehen eines zusätzlichen zweiten Zwischenkreisspeichers, der eine mehrfache Speicherkapazität des ersten Zwischenkreisspeichers aufweist, dazu führen, dass zunächst Energie bei Schwingungsbergen gespeichert wird und bei Schwingungstälern zurück in den Antriebsstrang fließen kann, so dass die Komponenten des Antriebsstranges für relativ konstante Belastungen dimensioniert werden können, was zu deutlichen Gewichtseinsparungen führt.

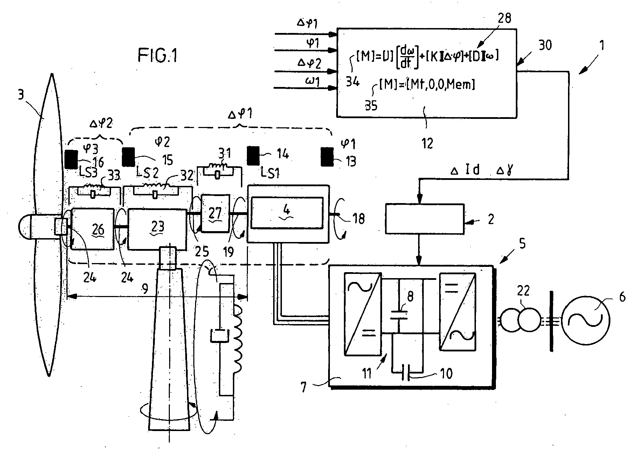

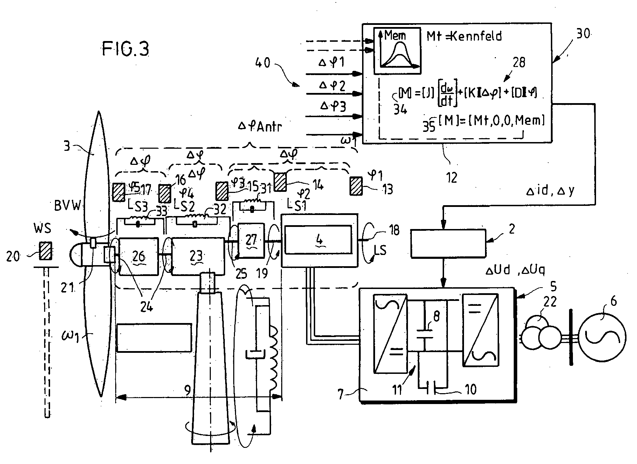

Vorzugsweise ist die stationäre Energiegewinnungsanlage eine Windenergieanlage, die auch WEA- bzw. WKA (Windkraftanlage) genannt und mit den Figuren 1 und 3 näher erläutert wird.

In einer bevorzugten Ausführungsform der Erfindung ist die Stromsteuerung derart ausgelegt, dass mittels einer Drehmomentsteuerung die in ein Netz bzw. an die Last abgegebene elektrische Wirkleistung konstant bleibt, und die aus der Stromsteuerung resultierenden Änderungen der Wirkleistung und der Blindleistung in einem Zwischenkreis der Leistungselektronik kompensiert sind oder in den Generatorwicklungen bzw. in Umrichtern zusätzlich temporär in Wärme umwandelbar sind. Diese Variante hat den Vorteil, dass sie nicht auf einen weiteren zusätzlichen Zwischenkreisspeicher mit mehrfacher Speicherkapazität gegenüber dem ersten Zwischenkreisspeicher angewiesen ist und kann insbesondere generatorseitige Schwingungen aus dem kritischen Frequenzspektrum bis zu einigen Zehn Hz kompensieren, ohne den Aufwand für die Leistungselektronik zu erhöhen.

Weiterhin ist es vorgesehen, dass ein Modell der Energiegewinnungsanlage zwei aktive Elemente in Form von Windkrafteingabe beispielsweise durch den Rotor und elektrischer Leistungsabgabe beispielsweise durch den Generator mit dazwischen angeordneten passiven Elementen, wie Induktivitäten und Kapazitäten sowie Federsteifigkeiten der Konstruktionselemente wie beispielsweise einem Übersetzungsgetriebe aufweist. Ein derartiges Modell kann mit Hilfe entsprechend angeordneter Winkellagesensoren innerhalb der Energiegewinnungsanlage gleichzeitig gegensteuern, um kritische Frequenzbereiche, die Eigenschwingungen anregen könnten, zu vermeiden. Dazu kann die Energiegewinnungsanlage eine zentrale Steuereinheit aufweisen, in der ein das Modell beschreibendes Gleichungssystem parallel und online simuliert wird. Damit können generatorseitige höhere transiente Schwingungen und die Resonanzschwingungen in dem Antriebsstrang mit der Stromsteuerung des Generators ausgesteuert werden.

Vorzugsweise sind Drehwinkellagesensoren mindestens an dem Wellenende des Generatorrotors, an der Antriebsachse des Generators und an dem Rotor angeordnet, deren Messwerte Eingangsgrößen für die oben erwähnte zentrale Steuereinheit, in der Parameter des Modells abgelegt sind, darstellen. Dazu kann die Energiegewinnungsanlage zusätzlich zu den Drehwinkellagesensoren mindestens einen Windsensor und einen Sensor für den Rotorblattverstellwinkel aufweisen. Auch mit derartigen Sensoren sind weitere Verbesserungen der Anpassung des Modells an die reale Energiegewinnungsanlage möglich und können beim Aufschaukeln von Schwingungen vorbeugen.

Vorzugsweise weist der Antriebsstrang ein Übersetzungsgetriebe auf, das zwischen einer an den Rotor gekoppelten Antriebswelle und einer mit dem Übersetzungsgetriebe gekoppelten Abtriebswelle angeordnet ist. Ein derartiges Übersetzungsgetriebe setzt die relativ niedrige Frequenz des Rotors auf entsprechend höhere Drehzahlen für den Generator herauf.

Außerdem ist es vorgesehen in einer weiteren bevorzugten Ausführungsform der Energiegewinnungsanlage, dass die Antriebswelle und/oder die Abtriebswelle eine Kupplung aufweisen. Dieses können Sicherheitskupplungen sein, die starr die Antriebswelle des Rotors mit der Antriebswelle des Getriebes verbinden und weiterhin die Abtriebswelle des Getriebes mit der Antriebswelle des Generators verbinden, oder Schaltkupplungen sein, die bei extremer Last die Wellen entkoppeln und ein Freilaufen ermöglichen. Außerdem können Abbremsvorrichtungen sowohl auf der Antriebswelle als auch auf der Abtriebswelle eines Getriebes vorgesehen werden. Diese dienen jedoch lediglich der Verbesserung der Funktionsfähigkeit der Energiegewinnungsanlage und weniger oder gar nicht der Kompensation von auftretenden Schwingungen in der Energiegewinnungsanlage.

Ein Verfahren zur Steuerung einer Energiegewinnungsanlage, weist die folgenden Verfahrenschritte auf. Zunächst werden Winkellagesensoren in einem Antriebsstrang der Energiegewinnungsanlage, die mindestens einen mechanischen Rotor, eine Antriebwelle, ein Übersetzungsgetriebe, eine Abtriebswelle, einen Generator mit Rotor/Statoreinheit und eine Leistungselektronik aufweist, angeordnet. Durch das Anordnen der Lagesensoren können nun Drehwinkelunterschiede f ₁-f ₂, f ₂-f ₃, f ₃-f ₄ und f ₄-f ₅ mit den Lagesensoren erfasst werden, indem z.B. der Drehwinkelzuwachs Δϕ₁, Δϕ₂, Δϕ₃ des Übersetzungsgetriebes und die Gesamtverdrehung Δϕ_{A} des Antriebsstranges überwacht werden. Eine parallele Simulation durch ein Gleichungssystem in einer zentralen Steuereinheit unter Zugrundelegung eines Modells der Energiegewinnungsanlage aus Masse-Feder-Dämpfungselementen wird in Echtzeit durchgeführt. Das elektromagnetische Teil-Modell des Generators ist als ein Bestandteil des Gesamtmodells in Park-Koordinatensystem (d,q,0) dargestellt. Dabei werden Sollwerte für eine für eine Stromänderungsdifferenz Δl_{q} und eine Phasendifferenz Δγ des Stroms in Bezug auf eine Generatorspannung zum Ausgleich von transienten Schwingungen der Energiegewinnungsanlage generiert.

Ein derartiges Verfahren hat den Vorteil, dass durch Anpassung des Modells an die real auftretenden und gemessenen Belastungs- und Schwingungszustände rechtzeitig und frühzeitig durch eine Stromsteuerung und eine Energieflusssteuerung gegengesteuert werden kann, um derartige Schwingungen und Störgrößen in der Energiegewinnungsanlage zu kompensieren und eine konstante Wirkleistung an das Netz bzw. an eine Last abzugeben.

Vorzugsweise wird in einer Steuereinheit ein dynamisches Modell der Energiegewinnungsanlage gespeichert, das Matrixgleichungen, welche Drehmomentvektoren mit einer Matrix der Flächenträgheitsmomente und einer Matrix der Steifigkeiten und einer Matrix der Dämpfungen additiv verknüpft und dabei Drehmomentvektoren in Bezug auf ein Rotormoment und ein elektromechanisches Moment des Generators berücksichtigt. Dabei ist das Verfahren in der Lage, in dem Modell lineare und nicht lineare Parameter als Funktion der jeweiligen Größen, wie Drehmoment, Drehzahl und Umdrehungswinkel der Komponenten des Antriebsstranges zu berücksichtigen. Für das Verfahren wird die Stromsteuerung derart ausgelegt, dass mittels einer Drehstromsteuerung die in dem Netz bzw. an die Last abgegebene elektrische Wirkleistung konstant bleibt und die aus der Stromsteuerung resultierenden Änderungen der Wirkleistung und der Blindleistung in einem Zwischenkreis der Leistungselektronik kompensiert werden oder in den Generatorwicklungen bzw. in Umrichtern temporär zusätzlich in Wärme umgewandelt werden.

Ein weiterer Aspekt des Verfahrens sieht vor, dass in dem zugrundeliegenden Modell der Energiegewinnungsanlage zwei aktive Elemente in Form von Windkrafteingabe und elektrischer Leistungsabgabe mit dazwischen angeordneten passiven Elementen, wie Induktivitäten und Kapazitäten sowie Federsteifigkeiten der Konstruktionselemente berücksichtigt werden. Dabei können die generatorseitigen höheren transienten Schwingungen und die Resonanzschwingungen in dem Antriebsstrang mit der Stromsteuerung des Generators ausgesteuert werden, ohne einen zusätzlichen Speicher mit mehrfacher Speicherkapazität des vorhandenen Zwischenkreisspeichers der Leistungselektronik vorzusehen.

Darüber hinaus ist es vorgesehen, dass Drehwinkellagesensoren mindestens an der Abtriebswelle des Generators und der Antriebswelle des Generators sowie am Rotor angeordnet werden, deren Messwerte Eingangsgrößen für die zentrale Steuereinheit liefern. Ferner können zusätzlich zu den Drehwinkellagesensoren die Windverhältnisse durch einen Windsensor erfasst werden und in dem Modell entsprechend berücksichtigt werden. Gleiches gilt für die Rotorblattstellung, die über einen Sensor für den Rotorblattverstellwinkel erfasst wird und in dem Modell mit eingearbeitet sein kann.

Die Erfindung wird nun anhand der nachfolgenden Figuren näher erläutert.
- Figur 1: zeigt eine Prinzipskizze einer Energiegewinnungsanlage einer ersten Ausführungsform der Erfindung;
- Figur 2: zeigt ein schematisches Diagramm des Schwingungsverhaltens einer Energiegewinnungsanlage gemäß Figur 1;
- Figur 3: zeigt eine Prinzipskizze einer Energiegewinnungsanlage gemäß einer zweiten Ausführungsform der Erfindung;
- Figur 4: zeigt ein schematisches Vektordiagramm eines Generators einer Energiegewinnungsanlage gemäß Figur 1 oder Figur 2.

Figur 1 zeigt eine Prinzipskizze einer Energiegewinnungsanlage 1 einer ersten Ausführungsform der Erfindung. Diese Energiegewinnungsanlage weist in dieser Ausführungsform der Erfindung einen mechanisch angetriebenen Rotor 3 auf, der über eine Antriebswelle 24 und eine Kupplung 26 ein Übersetzungsgetriebe 23 in Drehbewegungen versetzt, wobei die Abtriebswelle 25 des Übersetzungsgetriebes über eine weitere Kupplung 27 mit der Antriebswelle 19 eines Generators 4 mechanisch verbunden ist, der ein Wellenende 18 des Generatorrotors aufweist, an dem ein erster Drehwinkellagesensor 13 angeordnet ist. Relativ zu diesem Drehwinkellagesensor 13, der einen Bezugswert erfasst, sind weitere Drehwinkellagesensoren 14 bis 16 in dem Antriebsstrang 9 vorgesehen. An der Antriebswelle 19 des Getriebes ist ein Drehwinkellagesensor 14, an der Antriebswelle des Übersetzungsgetriebes 23 ist ein weiterer Drehwinkellagesensor 15 und am Beginn des Abtriebstranges 9 mit der Antriebswelle 24, die mit dem Rotor 3 zusammenwirkt, ist schließlich ein Drehwinkellagesensor 16 angeordnet. Zwischen diesen Drehwinkellagesensoren 13 bis 16 sind zumindest in dem Antriebsstrang 9 Komponenten wie die Kupplungen und das Übersetzungsgetriebe vorhanden sowie die An- und Abtriebswellen selbst, welche theoretisch durch die Masse-Feder-Dämpfungselemente 31, 32 und 33 in eine Modellrechnung Eingang finden können.

An dem Generatorausgang ist eine Leistungselektronik angeschlossen, mit der trotz unterschiedlicher Anströmung des Rotors 3 eine relativ konstante elektrische Leistung über den Transformator in das Netz bzw. die Last 6 eingespeist werden kann. Dazu wird ein Rotorblattverstellwinkel an die unterschiedliche Windgeschwindigkeit angepasst. Bei Windböen oder anderen Störgrößen, die auf den Rotor 3 einwirken können, ist es jedoch möglich, dass Schwingungen im Antriebsstrang 9 auftreten, ferner ist auch generatorseitig mit Schwingungsphänomenen zu rechnen. Während das Frequenzspektrum der Schwingungen rotorseitig bei einigen Zehntel Hz bis einigen Zehn Hz liegt, tritt generatorseitig ein Frequenzspektrum zwischen einigen Zehn Hz und einigen Hundert Hz auf. Diese generatorseitigen Schwingungen können durch einen ersten Zwischenkreisspeicher 8, der in dieser Ausführungsform der Erfindung ein Kondensator ist und in einem Zwischenkreis 11 der Leistungselektronik 5 angeordnet ist, ausgeglichen bzw. kompensiert werden. Dazu ist es vorgesehen, eine Stromsteuerung 7 für die Leistungselektronik 5 vorzuhalten, wobei eine Stromsteuereinrichtung 2 auf den Zwischenkreis 11 der Leistungselektronik 5 einwirkt.

Die Steuereinrichtung 2 erhält Sollwertvorgaben für eine Stromdifferenz Δlq und eine Phasendifferenz Δγ von einer zentralen Steuereinheit 30, in der durch parallele Simulation ein Modell ausgewertet wird, das mit einem Gleichungssystem 28 aus Matrixgleichungen 34 und 35 arbeitet. Dazu werden in die zentrale Steuereinheit 30 Drehwinkelzuwächse Δϕ₁ und Δϕ₂ eingegeben sowie die Drehzahl ω₁ des Rotors des Generators. Zusätzlich wird als Ausgang der Drehwinkelzuwächse Δϕ₁ und Δϕ₂ der Drehwinkel f ₁, der mit dem Drehwinkellagesensor 13 am Wellenende 18 des Generatorrotors ermittelt wird, in die zentrale Steuereinheit 30 eingegeben.

Mit Hilfe der Matrix-Zustandgleichungen 34 und 35 werden die Sollwerte einer Stromdifferenz und einer Phasendifferenz in die Steuereinrichtung 2 eingegeben und in einen entsprechenden Pulsmuster der Leistungstransistoren des Frequenzumrichters der Leistungselektronik 5 umgewandelt und wie oben bereits geschildert, auf den Zwischenkreis der Leistungselektronik 5 einwirkt. Durch diesen Aufbau der Energiegewinnungsanlage und der zentralen Steuereinheit 30 unter Auswertung der Drehwinkellagen des Antriebsstranges 9 und des Generators 4 können generatorseitige Schwingungen allein durch den ersten Zwischenkreisspeicher 8 derart kompensiert werden, dass sie sich einerseits nicht zu höheren Amplituden aufschaukeln und idealerweise vollständig unterdrückt werden, und dass andererseits eine konstante Wirkleistung an das Netz bzw. die Last 6 abgegeben werden kann.

Zur Kompensation von rotorseitigen Schwingungen im Antriebsstrang 9 in dem oben erwähnten Frequenzbereich zwischen einigen Zehntel Hz und einigen Zehn Hz reicht die Stromregelung nicht aus, so dass mit Hilfe des Modells eine Energieflussregelung vorgesehen ist, die mit einem weiteren zusätzlichen Zwischenkreisspeicher 10 zusammenwirkt, dessen Speicherkapazität um ein Vielfaches höher ist als der erste Zwischenkreisspeicher 8. Bei rotorseitigen Störgrößen oder Schwingungen im Antriebsstrang 9 wird Energie bei einem Schwingungsberg in dem zusätzlichen Zwischenkreisspeicher gespeichert und in Schwingungstälern zurückgeführt, so dass sämtliche Antriebs- und Abtriebswellen, wie die dazwischen angeordneten Komponenten des Antriebsstranges 9, nicht überlastet werden, sondern vielmehr an ihrer zulässigen Belastungsgrenze in Bezug auf die auftretenden Drehmomente gefahren werden können. Somit ist es möglich, mit dieser kombinierten Regelung aus Stromregelung und Energieflussregelung, basierend auf den Matrixgleichungen 34 und 35, ein Höchstmaß an Wirkungsgrad bei gleichzeitig minimalem Materialaufwand für die Komponenten des Antriebsstranges zu realisieren und die Anregung von Eigenfrequenzen der Energiegewinnungsanlage zu unterdrücken.

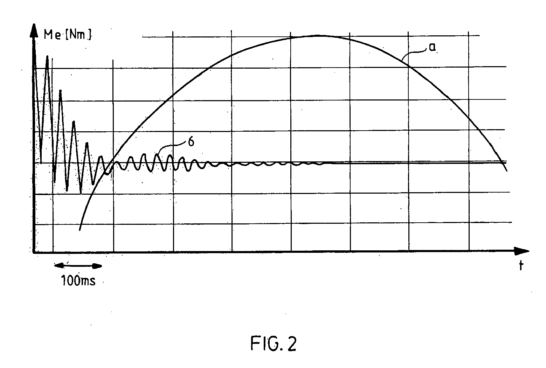

Figur 2 zeigt ein schematisches Diagramm des Schwingungsverhaltens einer Energiegewinnungsanlage gemäß Figur 1. Dazu ist auf der Ordinate das Dreh- bzw. Torsionsmoment in Newtonmetern aufgetragen und auf der Abszisse die Zeit t in Intervallen von 100 Millisekunden. Die Kurve a zeigt eine Halbperiode einer Schwingung, wie sie rotorseitig im Antriebsstrang 9 auftreten kann, verglichen mit generatorseitigen Schwingungen, die ein Drehmoment Me erzeugen, das, wie der Graph b zeigt, mit einer deutlich höheren Frequenz schwingt. Dabei sorgt die in Figur 1 gezeigte Stromregelungseinrichtung 2 für ein Abklingen derartiger Schwingungen in dem oberen Frequenzbereich, wie es die Kurve b zeigt.

Figur 3 zeigt eine Prinzipskizze einer Energiegewinnungsanlage 40 gemäß einer zweiten Ausführungsform der Erfindung. Der Unterschied zu der ersten Ausführungsform der Erfindung besteht darin, dass ein weiterer Winkellagesensor in dem Antriebsstrang 9 vorgesehen ist, so dass insgesamt nun fünf Winkellagesensoren 13 bis 17 für die Beurteilung und Messung der Schwingungsgefahr zur Verfügung stehen. Entsprechend ist die Anzahl an Drehwinkelzuwachseingaben erhöht, so dass nun nicht nur Δϕ₁ und Δϕ₂, sondern zusätzlich Δϕ₃ in die zentrale Steuereinheit 30 eingegeben werden. Außerdem ist in der zentralen Steuereinheit 30 ein Momentenkennfeld der Windturbine abgelegt, das sich auf die elektromagnetischen Momente des Generators bezieht. Darüber hinaus wird bei dieser zweiten Ausführungsform, der Erfindung durch einen Windsensor 20 und einen Sensor 21 für den Rotorblattverstellwinkel (BVW) eine weitere Verbesserung der Zuverlässigkeit des Modells geschaffen, indem die gemessenen Sensordaten über Windgeschwindigkeit und Verstellwinkel ebenfalls in das Modell der Energiegewinnungsanlage eingehen, um die Berechnung des Stromsollwertes und der Phasenverschiebung zwischen Strom und Generatorspannung weiter zu präzisieren.

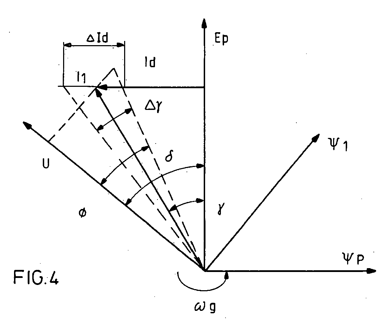

Figur 4 zeigt ein schematisches Vektordiagramm eines Generators einer Energiegewinnungsanlage gemäß Figur 1 oder Figur 2. Dieses Vektordiagramm gemäß Figur 4 rotiert mit der Rotationsfrequenz ω_{g} des Generatorrotors, wobei die Strom- und Spannungsvektoren I bzw. U dem Vektor der Polradspannung Eₚ bzw. der elektromotorischen Kraft um die Phasen γ für den Strom I bzw. d für die Spannung U vorauseilen, wobei in unserem Lastfall δ > γ ist.

Während Ψₚ den verketteten magnetischen Fluß durch das Polrad im Leerlauf des Generators zeigt, kennzeichnet der Vektor Ψ₁ die vektorielle Summe aus Feldreaktion des Stators und dem verketteten magnetischen Fluss durch das Polrad. Dabei eilt der Spannungsvektor U in diesem Diagramm dem Stromvektor I um die Phasendifferenz F voraus, so dass sich die elektrische Wirkleistung P zu P = U · I · cos F ergibt. Mit Hilfe des in den vorhergehenden Figuren gezeigten Modells werden Sollwerte Δlq und Δγ von dem zentralen Steuergerät ausgegeben, welche die Änderung der Phasenlage des Stromes I gegenüber der Generatorspannung U vorgeben, um generatorseitige Schwingungen zu kompensieren.

### Bezugszeichenliste

- 1: stationäre Energiegewinnungsanlage (1. Ausführungsform)
- 2: Steuereinrichtung
- 3: Rotor
- 4: Generator
- 5: Leistungselektronik mit einem Frequenzumrichter
- 6: Last bzw. Netz
- 7: Stromsteueruhg
- 8: erster Zwischenkreisspeicher
- 9: Antriebsstrang
- 10: zweiter Zwischenkreisspeicher
- 11: Zwischenkreis
- 12: Modell
- 13: Drehwinkellagesensor
- 14: Drehwinkellagesensor
- 15: Drehwinkellagesensor
- 16: Drehwinkellagesensor
- 17: Drehwinkellagesensor
- 18: Wellenende des Generatorrotors
- 19: Antriebswelle des Generators
- 20: Windsensor
- 21: Sensor für Rotorblattverstellwinkel
- 22: Transformator
- 23: Übersetzungsgetriebe
- 24: Antriebswelle der Energiegewinnungsanlage
- 25: Abtriebswelle des Übersetzungsgetriebes
- 26: Kupplung in der Antriebswelle
- 27: Kupplung in der Abtriebswelle
- 28: Gleichungssystem
- 30: zentrale Steuereinheit
- 31: Masse-Feder-Dämpfungselement
- 32: Masse-Feder-Dämpfungselement
- 33: Masse-Feder-Dämpfungselement
- 34: Matrixgleichung
- 35: Matrixgleichung
- 40: Energiegewinnungsanlage (2. Ausführungsform)
- Δld: Stromänderungsdifferenz
- I: Generatorstrom
- U: Generatorspannung
- P: Wirkleistung
- Q: Blindleistung

- Δγ: Phasendifferenz
- f _{A}: Gesamtverdrehung im Antriebstrang
- f ₁ bis f ₅: Drehwinkellagen
- Δϕ₁ bis Δϕ₃: Drehwinkelzuwachs

## Patentansprüche

1. Stationäre Energiegewinnungsanlage mit einer Steuereinrichtung (2) zur Steuerung von Strom und Energiefluss, wobei die Energiegewinnungsanlage (1) mindestens einen mechanisch angetriebenen Rotor (3) und einen mit dem Rotor (3) gekoppelten Generator (4) aufweist, und wobei eine mit dem Generator (4) in Wirkverbindung stehende Leistungselektronik (5) einen variablen Energiefluss von dem Rotor (3) durch den Generator (4) und die Leistungselektronik (5) zu einer Last (6) ermöglicht,
und mit einer zentralen Steuereinheit (30), die Mittel aufweist zum.
- Anordnen von Lagesensoren (13 bis 17) in einem Antriebsstrang (9) der Energiegewinnungsanlage (1), die mindestens einen mechanischen Rotor (3), eine Antriebwelle (24), ein Übersetzungsgetriebe (23), einen Generator (4) mit Rotor/Statoreinheit und eine Leistungselektronik (5) aufweist;
- Erfassen von Drehwinkelunterschieden (ϕ₁ bis ϕ₂; ϕ₂ bis ϕ₃; ϕ₃ bis ϕ₄; ϕ₄ bis ϕ₅) der Lagesensoren (13 bis 17) unter
- Überwachen des Drehwinkelzuwachses (Δϕ₁, Δϕ₂, Δϕ₃) des Übersetzungsgetriebes (23) und der Gesamtverdrehung (Δϕ_{A}) des Antriebstranges (9);
- Parallele Simulation eines Gleichungssystems (28) in einer zentralen Steuereinheit (30) unter Zugrundelegung eines Modells der Energiegewinnungsanlage (1) aus Masse-Feder-Dämpfungselementen (31 bis 33);
- Generieren von Sollwerten für eine Stromänderungsdifferenz (Δlq) und eine Phasendifferenz (Δγ) des Stromes (I) in Bezug auf eine Generatorspannung (U) zum Ausgleich von transienten Schwingungen der Energiegewinnungsanlage (1),
- wobei in dem zugrundeliegenden Modell der Energiegewinnungsanlage (1) zwei aktive Elemente in Form von Windkrafteingabe und elektrischer Leistungsabgabe mit dazwischen angeordneten passiven Elementen, wie Induktivitäten und Kapazitäten sowie Federsteifigkeiten der Konstruktionselemente einschließlich des Konstruktionselements des Übersetzungsgetriebes berücksichtigt werden.

2. Energiegewinnungsanlage nach Anspruch 1,
**dadurch gekennzeichnet,**
**dass** zum Ausgleich von generatorseitigen Schwingungsbelastungen mindestens eine Stromsteuerung (7) mit Hilfe eines ersten Zwischenkreisspeichers (8) der Leistungselektronik (5) und zum Ausgleich von mechanischen Schwingungsbelastungen und Störgrößen eines Antriebsstranges (9) eine Energieflusssteuerung mit Hilfe mindestens eines in der Leistungselektronik (5) angeordneten zusätzlichen zweiten Zwischenkreisspeichers (10) vorgesehen ist, der eine mehrfache Speicherkapazität des ersten Zwischenkreisspeichers (8) aufweist.

3. Energiegewinnungsanlage nach Anspruch 2,
**dadurch gekennzeichnet,**
**dass** die Energiegewinnungsanlage (1) Schwingungen im Frequenzspektrum von einigen zehntel Hz bis einige 10 Hz auf der Rotorseite (3) und einigen zehn Hz bis einigen hundert Hz auf der Generatorseite (4) aufweist.

4. Energiegewinnungsanlage nach Anspruch 2 oder Anspruch 3,
**dadurch gekennzeichnet,**
**dass** die Stromsteuerung derart ausgelegt ist, dass mittels einer Drehmomentsteuerung die in ein Netz bzw. an die Last (6) abgegebene elektrische Wirkleistung konstant bleibt, und die aus der Stromsteuerung resultierenden Änderungen der Wirkleistung in einem Zwischenkreis (11) der Leistungselektronik (5) kompensiert sind oder in den Generatorwicklungen bzw. in Umrichtern zusätzlich in Wärme umwandelbar sind.

5. Energiegewinnungsanlage nach Anspruch 1,
**dadurch gekennzeichnet,**
**dass** in der zentralen Steuereinheit 30 ein das Modell (12) beschreibendes Gleichungssystem parallel online simuliert wird.

6. Energiegewinnungsanlage nach Anspruch 1,
**dadurch gekennzeichnet,**
**dass** die generatorseitigen höheren transienten Schwingungen und die Resonanzschwingungen in dem Antriebsstrang (9) mit der Stromsteuerung des Generators (4) aussteuerbar sind.

7. Energiegewinnungsanlage nach einem der vorhergehenden Ansprüche 2 bis 6,
**dadurch gekennzeichnet,**
**dass** Drehwinkellagesensoren (13 bis 15) mindestens an der Abtriebswelle des Generators (5), der Antriebswelle (19) des Generators (5) und am Rotor angeordnet sind, deren Messwerte Eingangsgrößen für die zentrale Steuereinheit sind.

8. Energiegewinnungsanlage nach einem der vorhergehenden Ansprüche 2 bis 7,
**dadurch gekennzeichnet,**
**dass** die Energiegewinnungsanlage (1) zusätzlich zu den Drehwinkellagesensoren (13 bis 17) mindestens einen Windsensor (20) und einen Sensor für den Rotorblattverstellwinkel aufweist.

9. Energiegewinnungsanlage nach einem der vorhergehenden Ansprüche 2 bis 8,
**dadurch gekennzeichnet,**
**dass** der Antriebsstrang (9) ein Übersetzungsgetriebe (23) aufweist, das zwischen einer an den Rotor (3) gekoppelten Antriebswelle (24) und einer mit dem Übersetzungsgetriebe (23) gekoppelten Abtriebswelle (25) angeordnet ist.

10. Energiegewinnungsanlage nach Anspruch 9,
**dadurch gekennzeichnet,**
**dass** die Antriebswelle (24) und/oder die Abtriebswelle (25) eine Kupplung (26) aufweist.

11. Energiegewinnungsanlage nach einem der vorhergehenden Ansprüche 2 bis 10,
**dadurch gekennzeichnet,**
**dass** die Antriebswelle (24) und/oder die Abtriebswelle (25) eine Abbremsvorrichtung aufweist.

12. Verfahren zur Steuerung einer Energiegewinnungsanlage (1), das folgende Verfahrenschritte aufweist:
- Anordnen von Lagesensoren (13 bis 17) in einem Antriebsstrang (9) der Energiegewinnungsanlage (1), die mindestens einen mechanischen Rotor (3), eine Antriebwelle (24), ein Übersetzungsgetriebe (23), einen Generator (4) mit Rotor/Statoreinheit und eine Leistungselektronik (5) aufweist;
- Erfassen von Drehwinkelunterschieden (ϕ₁ bis ϕ₂; ϕ₂ bis ϕ₃; ϕ₃ bis ϕ₄; ϕ₄ bis ϕ₅) der Lagesensoren (13 bis 17) unter
- Überwachen des Drehwinkelzuwachses (Δϕ₁, Δϕ₂, Δϕ₃) des Übersetzungsgetriebes (23) und der Gesamtverdrehung (Δϕ_{A}) des Antriebstranges (9);
- Parallele Simulation eines Gleichungssystems (28) in einer zentralen Steuereinheit (30) unter Zugrundelegung eines Modells der Energiegewinnungsanlage (1) aus Masse-Feder-Dämpfungselementen (31 bis 33);
- Generieren von Sollwerten für eine Stromänderungsdifferenz (Δlq) und eine Phasendifferenz (Δγ) des Stromes (I) in Bezug auf eine Generatorspannung (U) zum Ausgleich von transienten Schwingungen der Energiegewinnungsanlage (1),
- wobei in dem zugrundeliegenden Modell der Energiegewinnungsanlage (1) zwei aktive Elemente in Form von Windkrafteingabe und elektrischer Leistungsabgabe mit dazwischen angeordneten passiven Elementen, wie Induktivitäten und Kapazitäten sowie Federsteifigkeiten der Konstruktionselemente einschließlich des Konstruktionselements des Übersetzungsgetriebes berücksichtigt werden.

13. Verfahren nach Anspruch 12,
**dadurch gekennzeichnet,**
**dass** in einer Steuereinheit (30) ein dynamisches Modell der Energiegewinnungsanlage (1) gespeichert wird, das Matrixgleichungen (34, 35) welche Drehmomentvektoren mit einer Matrix der Massenträgheitsmomente (J) und einer Matrix der Steifigkeiten (K) und einer Matrix der Dämpfungen (D) additiv verknüpft und das Drehmomentvektoren in Bezug auf ein Rotormoment (M_{z}) und ein elektromechanisches Moment (Mₒₘ) des Generators (4) berücksichtigt.

14. Verfahren nach Anspruch 12 oder Anspruch 13,
**dadurch gekennzeichnet,**
**dass** in dem Modell lineare und nicht lineare Parameter als Funktionen der jeweiligen Größen, wie Drehmoment, Drehzahl und Verdrehungswinkel der Komponenten des Antriebsstranges (9) berücksichtigt werden.

15. Verfahren nach einem der Ansprüche 12 bis 14,
**dadurch gekennzeichnet,**
**dass** Schwingungen im Frequenzspektrum von einigen zehntel Hz bis einige 10 Hz auf der Rotorseite (3) und einigen zehn Hz bis einigen hundert Hz auf der Generatorseite (4) in dem Simulationsmodell berücksichtigt werden.

16. Verfahren nach einem der Ansprüche 12 bis 15,
**dadurch gekennzeichnet,**
**dass** die Stromsteuerung derart ausgelegt wird, dass mittels einer Drehmomentsteuerung die in ein Netz bzw. an die Last (6) abgegebene elektrische Wirkleistung (P) konstant bleibt, und die aus der Stromsteuerung resultierenden Änderungen der Wirkleistung (P) und der Blindleistung (Pⱼ) in einem Zwischenkreis der Leistungselektronik (5) kompensiert werden oder in den Generatorwicklungen bzw, in Umrichtern zusätzlich in Wärme umgewandelt werden.

17. Verfahren nach einem der Ansprüche 12 bis 16,
**dadurch gekennzeichnet,**
**dass** die generatorseitigen höheren transienten Schwingungen und die Resonanzschwingungen in dem Antriebsstrang (9) mit der Stromsteuerung des Generators (4) ausgesteuert werden.

18. Verfahren nach einem der Ansprüche 12 bis 17,
**dadurch gekennzeichnet,**
**dass** Drehwinkellagesensoren (13 bis 17) mindestens an der Abtriebswelle (18) des Generators (4), der Antriebswelle (19) des Generators (4) und am Rotor (3) angeordnet werden, deren Messwerte Eingangsgrößen für die zentrale Steuereinheit (30) liefern.

19. Verfahren nach einem der Ansprüche 12 bis 18,
**dadurch gekennzeichnet,**
**dass** zusätzlich zu den Drehwinkellagesensoren (13 bis 17) die Windverhältnisse durch einen Windsensor (20) erfasst werden und in dem Modell berücksichtigt werden.

20. Verfahren nach einem der Ansprüche 12 bis 19,
**dadurch gekennzeichnet,**
**dass** zusätzlich zu den Drehwinkellagesensoren (13 bis 17) die Rotorblattstellung durch einen Sensor für den Rotorblattverstellwinkel erfasst wird und in dem Modell berücksichtigt wird.

## Claims

1. Stationary energy generation plant having a control device (2) for controlling current and energy flow, with the energy generation plant (1) having at least one mechanically driven rotor (3) and a generator (4) which is coupled to the rotor (3), and with power electronics (5), which are operatively connected to the generator (4), allowing a variable energy flow from the rotor (3) through the generator (4) and the power electronics (5) to a load (6),
and having a central control unit (30) which has means for
- arrangement of position sensors (13 to 17) in a drive train (9) of the energy generation plant (1), which energy generation plant (1) has at least one mechanical rotor (3), a drive shaft (24), a step-up transmission (23), a generator (4) with a rotor/stator unit and power electronics (5) ;
- detection of rotation angle differences (ϕ₁ to (ϕ₂,; ϕ₂ to ϕ₃; ϕ₃ to ϕ₄; ϕ₄ to ϕ₅) by the position sensors (13 to 17) while
- monitoring the rotation angle increase (Δϕ₁, Δϕ₂, Δϕ₃) of the step-up transmission (23) and the overall twisting (Δϕ_{A}) of the drive train (9);
- parallel simulation by an equation system (28) in a central control unit (30) on the basis of a model of the energy generation plant (1) comprising mass and spring damping elements (31 to 33);
- generation of nominal values for a current change difference (Δlq) and a phase difference (Δy) of the current (I) with respect to a generator voltage (U) in order to compensate for transient oscillations in the energy generation plant (1),
with the basic model of the energy generation plant (1) taking account of two active elements in the form of a wind power input and electrical power output with passive elements arranged between them, such as inductances and capacitances as well as spring stiffnesses of the structural elements including the structural element of the step-up transmission.

2. Energy generation plant according to Claim 1,
**characterized in that**
in order to compensate for generator-side oscillating loads, at least one current control (7) is provided, with the aid of a first intermediate-circuit store (8) in the power electronics (5), and in order to compensate for mechanical oscillating loads and disturbance variables of a drive train (9), an energy flow control is provided, with the aid of at least one additional, second intermediate-circuit store (10) which is arranged in the power electronics (5) and has a number of times the storage capacity of the first intermediate-circuit store (8).

3. Energy generation plant according to Claim 2,
**characterized in that**
the energy generation plant (1) has oscillations in the frequency spectrum from a number of tenths of a Hz to a number of tens of Hz on the rotor side (3) and a number of tens of Hz to a number of hundreds of Hz on the generator side (4).

4. Energy generation plant according to Claim 2 or Claim 3,
**characterized in that**
the current control is designed such that the electrical real power which is emitted to a grid system or to the load (6) remains constant by means of a torque control, and the changes in the real power which result from the current control are compensated for in an intermediate circuit (11) of the power electronics (5), or can additionally be converted to heat in the generator windings and/or in converters.

5. Energy generation plant according to Claim 1,
**characterized in that**
in the central control unit 30, an equation system which describes the model (12) is simulated in parallel on-line.

6. Energy generation plant according to Claim 1,
**characterized in that**
the generator-side higher transient oscillations and the resonant oscillations in the drive train (9) can be controlled by the current control of the generator (4).

7. Energy generation plant according to one of the preceding Claims 2 to 6,
**characterized in that**
rotation angle position sensors (13 to 15) are arranged at least on the output-drive shaft of the generator (4), on the drive shaft (19) of the generator (4) and on the rotor, and their measured values are input variables for the central control unit.

8. Energy generation plant according to one of the preceding Claims 2 to 7,
**characterized in that**
the energy generation plant (1) has at least one wind sensor (20) and a sensor for the rotor blade pitch angle, in addition to the rotation angle position sensors (13 to 17).

9. Energy generation plant according to one of the preceding Claims 2 to 8,
**characterized in that**
the drive train (9) has a step-up transmission (23) which is arranged between a drive shaft (24), which is coupled to the rotor (3), and an output-drive shaft (25), which is coupled to the step-up transmission (23).

10. Energy generation plant according to Claim 9,
**characterized in that**
the drive shaft (24) and/or the output-drive shaft (25) have/has a clutch (26).

11. Energy generation plant according to one of the preceding Claims 2 to 10,
**characterized in that**
the drive shaft (24) and/or the output-drive shaft (25) have/has a braking apparatus.

12. Method for controlling an energy generation plant (1), which has the following method steps:
- arrangement of position sensors (13 to 17) in a drive train (9) of the energy generation plant (1), which energy generation plant (1) has at least one mechanical rotor (3), a drive shaft (24), a step-up transmission (23), a generator (4) with a rotor/stator unit and power electronics (5) ;
- detection of rotation angle differences (ϕ₁ to ϕ₂,; ϕ₂ to ϕ₃; ϕ₃ to ϕ₄; ϕ₄ to ϕ₅) by the position sensors (13 to 17) while
- monitoring the rotation angle increase (Δϕ₁, Δϕ₂, Δϕ₃) of the step-up transmission (23) and the overall twisting (Δϕ_{A}) of the drive train (9);
- parallel simulation by an equation system (28) in a central control unit (30) on the basis of a model of the energy generation plant (1) comprising mass and spring damping elements (31 to 33);
- generation of nominal values for a current change difference (Δlq) and a phase difference (Δy) of the current (I) with respect to a generator voltage (U) in order to compensate for transient oscillations in the energy generation plant (1),
with the basic model of the energy generation plant (1) taking account of two active elements in the form of a wind power input and electrical power output with passive elements arranged between them, such as inductances and capacitances as well as spring stiffnesses of the structural elements including the structural element of the step-up transmission.

13. Method according to Claim 12,
**characterized in that**
a dynamic model of the energy generation plant (1) is stored in a control unit (30), which dynamic model takes account of matrix equations (34, 35) which additively link torque vectors with a matrix of the mass moment of inertia (J) and a matrix of the stiffnesses (K) and a matrix of the dampings (D), and takes account of torque vectors with respect to a rotor torque (M_{z}) and an electromechanical torque (Mₑₘ) of the generator (4).

14. Method according to Claim 12 or Claim 13,
**characterized in that**
the model takes account of linear and non-linear parameters as functions of the respective variables, such as the torque, rotation speed and twist angle of the components of the drive train (9).

15. Method according to one of Claims 12 to 14,
**characterized in that**
oscillations in the frequency spectrum from a number of tenths of a Hz to a number of tens of Hz on the rotor side (3) and a number of tens of Hz to a number of hundreds of Hz on the generator side (4) are taken into account in the simulation model.

16. Method according to one of Claims 12 to 15,
**characterized in that**
the current control is designed such that the electrical real power (P) which is emitted into a grid system or to the load (6) remains constant by means of a torque control, and the changes which result from the current control in the real power (P) and the reactive power (Pⱼ) are compensated for in an intermediate circuit of the power electronics (5), or are additionally converted to heat in the generator windings and/or in converters.

17. Method according to one of Claims 12 to 16,
**characterized in that**
the generator-side higher transient oscillations and the resonant oscillations in the drive train (9) are controlled by the current control of the generator (4).

18. Method according to one of Claims 12 to 17,
**characterized in that**
rotation angle position sensors (13 to 15) are arranged at least on the output-drive shaft (18) of the generator (4), on the drive shaft (19) of the generator (4) and on the rotor (3), and their measured values provide input variables for the central control unit (30).

19. Method according to one of Claims 12 to 18,
**characterized in that**
in addition to the rotation angle position sensors (13 to 17), the wind conditions are detected by a wind sensor (20), and are taken into account in the model.

20. Method according to one of Claims 12 to 19,
**characterized in that**
in addition to the rotation angle position sensors (13 to 17), the rotor blade position is detected by a sensor for the rotor blade pitch angle and is taken into account in the model.

## Revendications

1. Installation de production d'énergie fixe comprenant un dispositif de commande (2) pour commander le courant et le flux d'énergie, l'installation de production d'énergie (1) présentant au moins un rotor (3) entraîné mécaniquement et un générateur (4) couplé avec le rotor (3), et une électronique de puissance (5) qui est en liaison active avec le générateur (4) permettant un flux d'énergie variable depuis le rotor (3) jusqu'à une charge (6) en passant par le générateur (4) et l'électronique de puissance (5), et comprenant une unité de commande centrale (30) qui présente des moyens pour
- disposer des détecteurs de position (13 à 17) dans une chaîne de transmission (9) de l'installation de production d'énergie (1), laquelle présente au moins un rotor mécanique (3), un arbre d'entraînement (24), un engrenage de démultiplication (23), un générateur (4) avec unité rotor/stator et une électronique de puissance (5) ;
- détecter des différences angulaires (ϕ₁ à ϕ₂ ; ϕ₂ à ϕ₃ ; ϕ₃ à ϕ₄ ; ϕ₄ à ϕ₅) des détecteurs de position (13 à 17) en
- surveillant l'augmentation de l'angle de rotation (Δϕ₁, Δϕ₂, Δϕ₃) de l'engrenage de démultiplication (23) et la rotation totale (Δϕ_{A}) de la chaîne de transmission (9) ;
- simulant en parallèle un système d'équation (28) dans une unité de commande centrale (30) en se basant sur un modèle de l'installation de production d'énergie (1) composé d'éléments d'amortisseur masse-ressort (31 à 33) ;
- générant des valeurs de consigne pour une différence de variation de courant (Δlq) et une différence de phase (Δγ) du courant (I) en référence à une tension de générateur (U) pour compenser des oscillations transitoires de l'installation de production d'énergie (1),
- deux éléments actifs sous la forme d'une entrée de l'énergie éolienne et d'une délivrance de puissance électrique, avec des éléments passifs tels que des inductances et des capacités disposés entre ceux-ci, ainsi que les résiliences des éléments de construction, y compris l'élément de construction de l'engrenage de démultiplication, étant pris en considération dans le modèle de l'installation de production d'énergie (1) servant de base.

2. Installation de production d'énergie selon la revendication 1, **caractérisée en ce que** pour compenser des contraintes d'oscillation du côté du générateur, il est prévu au moins une commande du courant (7) à l'aide d'un premier accumulateur de circuit intermédiaire (8) de l'électronique de puissance (5) et pour compenser des contraintes d'oscillation mécaniques et des grandeurs parasites d'une chaîne de transmission (9), il est prévu une commande de flux d'énergie à l'aide d'au moins un deuxième accumulateur de circuit intermédiaire (10) supplémentaire disposé dans l'électronique de puissance (5), lequel présente plusieurs fois la capacité d'accumulation du premier accumulateur de circuit intermédiaire (8).

3. Installation de production d'énergie selon la revendication 2, **caractérisée en ce que** l'installation de production d'énergie (1) présente des oscillations dans le spectre de fréquences de quelques dixièmes de Hz à quelques dizaines de Hz du côté du rotor (3) et de quelques dizaines de Hz à quelques centaines de Hz du côté du générateur (4).

4. Installation de production d'énergie selon la revendication 2 ou la revendication 3, **caractérisée en ce que** la commande de courant est conçue de telle sorte que la puissance active électrique délivrée dans un réseau ou à la charge (6) reste constante au moyen d'une commande du couple et les modifications de la puissance active résultant de la commande de courant sont compensées dans un circuit intermédiaire (11) de l'électronique de puissance (5) ou alors elles peuvent en plus être converties en chaleur dans les enroulements du générateur ou dans des convertisseurs.

5. Installation de production d'énergie selon la revendication 1, **caractérisée en ce qu'**un système d'équation décrivant le modèle (12) est simulé parallèlement en ligne dans l'unité de commande centrale (30).

6. Installation de production d'énergie selon la revendication 1, **caractérisée en ce que** les oscillations transitoires plus élevées du côté du générateur et les oscillations de résonance dans la chaîne de transmission (9) peuvent être commandées avec la commande de courant du générateur (4).

7. Installation de production d'énergie selon l'une des revendications précédentes 2 à 6, **caractérisée en ce que** des détecteurs de position angulaire (13 à 15) dont les valeurs mesurées sont les grandeurs d'entrée pour l'unité de commande centrale sont disposés au moins sur l'arbre de sortie du générateur (4), sur l'arbre d'entraînement (19) du générateur (4) et sur le rotor.

8. Installation de production d'énergie selon l'une des revendications précédentes 2 à 7, **caractérisée en ce que** l'installation de production d'énergie (1) présente en plus des détecteurs de position angulaire (13 à 17) au moins un détecteur de vent (20) et un détecteur pour l'angle de positionnement des pales du rotor.

9. Installation de production d'énergie selon l'une des revendications précédentes 2 à 8, **caractérisée en ce que** la chaîne de transmission (9) présente un engrenage de démultiplication (23) qui est disposé entre un arbre d'entraînement (24) couplé au rotor (3) et un arbre de sortie (25) couplé à l'engrenage de démultiplication (23).

10. Installation de production d'énergie selon la revendication 9, **caractérisée en ce que** l'arbre d'entraînement (24) et/ou l'arbre de sortie (25) présentent un accouplement (26).

11. Installation de production d'énergie selon l'une des revendications précédentes 2 à 10, **caractérisée en ce que** l'arbre d'entraînement (24) et/ou l'arbre de sortie (25) présentent un dispositif de freinage.

12. Procédé de commande d'une installation de production d'énergie (1) qui présente les étapes de procédé suivantes :
- disposition de détecteurs de position (13 à 17) dans une chaîne de transmission (9) de l'installation de production d'énergie (1), laquelle présente au moins un rotor mécanique (3), un arbre d'entraînement (24), un engrenage de démultiplication (23), un générateur (4) avec unité rotor/stator et une électronique de puissance (5) ;
- détection de différences angulaires (ϕ₁ à ϕ₂ ; ϕ₂ à ϕ₃ ; ϕ₃ à ϕ₄ ; ϕ₄ à ϕ₅) des détecteurs de position (13 à 17) en
- surveillant l'augmentation de l'angle de rotation (Δϕ₁, Δϕ₂, Δϕ₃) de l'engrenage de démultiplication (23) et la rotation totale (Δϕ_{A}) de la chaîne de transmission (9) ;
- simulant en parallèle un système d'équation (28) dans une unité de commande centrale (30) en se basant sur un modèle de l'installation de production d'énergie (1) composé d'éléments d'amortisseur masse-ressort (31 à 33) ;
- générant des valeurs de consigne pour une différence de variation de courant (Δlq) et une différence de phase (Δγ) du courant (I) en référence à une tension de générateur (U) pour compenser des oscillations transitoires de l'installation de production d'énergie (1),
- deux éléments actifs sous la forme d'une entrée de l'énergie éolienne et d'une délivrance de puissance électrique, avec des éléments passifs tels que des inductances et des capacités disposés entre ceux-ci, ainsi que les résiliences des éléments de construction, y compris l'élément de construction de l'engrenage de démultiplication, étant pris en considération dans le modèle de l'installation de production d'énergie (1) servant de base.

13. Procédé selon la revendication 12, **caractérisé en ce qu'**un modèle dynamique de l'installation de production d'énergie (1) est mémorisé dans une unité de commande (30), lequel prend en considération des équations matricielles (34, 35) qui combinent par addition les vecteurs de couple avec une matrice des moments d'inertie de masse (J) et une matrice des rigidités (K) et une matrice des amortissements (D) ainsi que des vecteurs de couple en référence à un moment de rotor (M_{z}) et un moment électromécanique (Mₑₘ) du générateur (4).

14. Procédé selon la revendication 12 ou la revendication 13, **caractérisé en ce que** dans le modèle sont pris en considération des paramètres linéaires et non linéaires en tant que fonctions des grandeurs respectives telles que le couple, la vitesse de rotation et l'angle de rotation des composants de la chaîne de transmission (9).

15. Procédé selon l'une des revendications 12 à 14, **caractérisé en ce que** des oscillations dans le spectre de fréquences de quelques dixièmes de Hz à quelques dizaines de Hz du côté du rotor (3) et de quelques dizaines de Hz à quelques centaines de Hz du côté du générateur (4) sont prises en considération dans le modèle de simulation.

16. Procédé selon l'une des revendications 12 à 15, **caractérisé en ce que** la commande de courant est conçue de telle sorte que la puissance active (P) électrique délivrée dans un réseau ou à la charge (6) reste constante au moyen d'une commande du couple et les modifications de la puissance active (P) et de la puissance réactive (P_{J}) résultant de la commande de courant sont compensées dans un circuit intermédiaire de l'électronique de puissance (5) ou alors elles sont en plus converties en chaleur dans les enroulements du générateur ou dans des convertisseurs.

17. Procédé selon l'une des revendications 12 à 16, **caractérisé en ce que** les oscillations transitoires plus élevées du côté du générateur et les oscillations de résonance dans la chaîne de transmission (9) peuvent être commandées avec la commande de courant du générateur (4).

18. Procédé selon l'une des revendications 12 à 17, **caractérisé en ce que** des détecteurs de position angulaire (13 à 17), dont les valeurs mesurées fournissent les grandeurs d'entrée pour l'unité de commande centrale (30), sont disposés au moins sur l'arbre de sortie (18) du générateur (4), sur l'arbre d'entraînement (19) du générateur (4) et sur le rotor (3).

19. Procédé selon l'une des revendications 12 à 18, **caractérisé en ce qu'**en plus des détecteurs de position angulaire (13 à 17), les conditions de vent sont détectées par un détecteur de vent (20) et sont prises en considération dans le modèle.

20. Procédé selon l'une des revendications 12 à 19, **caractérisé en ce qu'**en plus des détecteurs de position angulaire (13 à 17), la position des pales du rotor est détectée par un détecteur pour l'angle de positionnement des pales du rotor et est prise en considération dans le modèle.
